# EUROPÄISCHE PATENTSCHRIFT

(11) **EP 4 248 128 B1**
(45) Veröffentlichungstag und Bekanntmachung des Hinweises auf die Patenterteilung: **16.10.2024**
(21) Anmeldenummer: 21801918.0
(22) Anmeldetag: 29.10.2021
(51) Int. Cl.: F21S 41/143, F21S 41/151, F21S 41/153, F21S 41/24, F21S 41/20, F21S 41/32, F21S 41/663, B60Q 1/10, B60Q 1/115, F21S 41/25

(54) **BELEUCHTUNGSVORRICHTUNG FÜR EINEN KRAFTFAHRZEUGSCHEINWERFER EINES EINSPURIGEN KRAFTFAHRZEUGES**
LIGHTING DEVICE FOR A MOTORBIKE VEHICLE HEADLIGHT
DISPOSITIF D'ÉCLAIRAGE POUR UN PHARE DE MOTOCYCLE

(30) Priorität: 17.11.2020 EP 20208068
(43) Veröffentlichungstag der Anmeldung: 27.09.2023
(73) Patentinhaber: ZKW Group GmbH, 3250 Wieselburg (AT)
(72) Erfinder: BÖLLMANN, Michael, 83607 Holzkirchen (DE); JANTSCHEK, Martin, 82291 Mammendorf (DE); BRAUNER, Nina, 3033 Altlengbach (AT); FISCHER, Marina, 3250 Wieselburg (AT); KYSELICA, Jaroslav, 95703 Dezerice (SK); KOKOSKA, Anton, 02705 Zázrivá (SK)
(74) Vertreter: Patentanwaltskanzlei Matschnig & Forsthuber OG
(86) Internationale Anmeldenummer: PCT/EP2021/080132
(87) Internationale Veröffentlichungsnummer: WO 2022/106178

(56) Entgegenhaltungen:
- EP-A1- 3 369 618
- EP-A2- 2 306 077
- EP-B1- 2 306 077
- EP-B1- 3 369 618
- WO-A1-2020/043443
- DE-A1- 102008 044 676
- DE-A1- 102018 104 261
- DE-A1- 102018 209 061
- DE-B3- 102009 053 581
- US-A1- 2015 131 324

## Beschreibung

Die Erfindung betrifft eine Beleuchtungsvorrichtung für einen Kraftfahrzeugscheinwerfer eines einspurigen Kraftfahrzeugs zur Erzeugung einer segmentierten Lichtverteilung, wobei die Beleuchtungsvorrichtung Folgendes umfasst:
- ein Optikkörper, umfassend einen Grundkörper und mehrere von dem Grundkörper vorragende Lichtleitkörper zum Formen einer festlegbaren segmentierten Lichtverteilung aus dem Licht von Lichtquellen, welche Lichtleitkörper jeweils eine Lichteintrittsfläche aufweisen, in welche Licht von den Lichtquellen einspeisbar ist, und eine Austrittsfläche aufweisen, aus welcher in den jeweiligen Lichtleitkörper einspeisbares Licht austritt, wobei die Austrittsflächen benachbarter Lichtleitkörper eine gemeinsame Austrittsfläche des Optikkörpers bilden,
- mehrere Lichtquellen, wobei zumindest eine Lichtquelle jeweils einer Eintrittsfläche eines Lichtleitkörpers zugeordnet ist,
- eine Projektionsoptik mit einer optischen Achse, welche Projektionsoptik eingerichtet ist, dass von der gemeinsamen Austrittsfläche austretende Licht vor der Beleuchtungsvorrichtung in Richtung einer Hauptabstrahlrichtung abzubilden,
- wobei der Grundkörper eine erste und eine zweite Lichtemissionshälfte aufweist, wobei jede Lichtemissionshälfte Lichtleitkörper aufweist, die zumindest in einer ersten Reihe entlang einer Geraden und in einer zweiten Reihe entlang einer Geraden angeordnet sind, wobei die Geraden der ersten und der zweiten Reihe zueinander um einen ersten Winkelversatz angeordnet sind, und wobei die erste und die zweite Lichtemissionshälfte zueinander spiegelsymmetrisch um eine vertikale Symmetrieachse an dem Grundkörper angeordnet sind.

Weiters betrifft die Erfindung einen Kraftfahrzeugscheinwerfer mit zumindest einer erfindungsgemäßen Beleuchtungsvorrichtung.

Um in Kurvenlage eines einspurigen Kraftfahrzeuges, beispielsweise eines Motorrades, die Ausleuchtung des Sichtbereiches des Fahrers zu verbessern, indem je nach Kurvenlage zusätzliche Lichtsegmente zugeschaltet werden.

Stand der Technik wurde dies bisher mittels zusätzlicher Reflektoren und/oder Lichtmodulen realisiert.

Diese zusätzlichen Module benötigen allerdings viel Bauraum, wobei ferner diese zusätzlichen Module zuvor zueinander eingestellt werden müssen, was zusätzlichen Aufwand bedeutet.

Die WO2020/043443 A1, die DE 10 2018 104261 A1, die DE 10 2009 053581 B3, die DE 10 2018 209061 A1, die EP 3 369 618 A1 und die DE 10 2008 044676 A1 zeigen Beleuchtungsvorrichtungen aus dem Stand der Technik.

Es ist eine Aufgabe der Erfindung eine verbesserte Beleuchtungsvorrichtung bereitzustellen.

Diese Aufgabe wird mit dem Kennzeichen des Anspruchs 1 gelöst.

Jede Reihe umfasst hierbei zumindest zwei Lichtleitkörper, welche entlang der entsprechenden Gerade angeordnet sind. Ferner erstrecken sich die Geraden ausgehend von der vertikalen Symmetrieachse quer zur Hauptabstrahlrichtung.

Ferner kann vorgesehen sein, dass jede Reihe zur Erzeugung eines Lichtsegments in der segmentierten Lichtverteilung mitwirkt, wobei das durch die entsprechende Reihe erzeugbare Lichtsegment ab- und anschaltbar ist.

Ferner kann vorgesehen sein, dass jeder Lichtleitkörper zur Erzeugung eines Lichtsegments in der segmentierten Lichtverteilung mitwirkt, wobei das durch den entsprechenden Lichtleitkörper erzeugbare Lichtsegment ab- und anschaltbar ist.

Es kann vorgesehen sein, dass die Austrittsflächen benachbarter Lichtleitkörper in einer Reihe unmittelbar aneinander angrenzen, sodass kein Spalt zwischen den Austrittsflächen vorhanden ist.

Es kann vorgesehen sein, dass die Austrittsfläche benachbarter Lichtleitkörper unterschiedlicher Reihen unmittelbar aneinander angrenzen, sodass kein Spalt zwischen den Austrittsflächen vorhanden ist.

Es kann vorgesehen sein, dass die Austrittsflächen der Lichtleitkörper einer Reihe ausgehend von der vertikalen Symmetrieachse in Richtung quer zur Hauptabstrahlrichtung größer werden.

Es kann vorgesehen sein, dass die Eintrittsflächen der Lichtleitkörper in einer gemeinsamen Vertikalebene angeordnet sind, welche Vertikalebene orthogonal zur optischen Achse der Projektionsoptik angeordnet ist.

Es kann vorgesehen sein, dass die Lichtquellen als Leuchtdioden ausgebildet sind.

Es kann vorgesehen sein, dass die Leuchtdioden unabhängig voneinander ansteuerbar sind. Es kann vorgesehen sein, dass die gemeinsame Austrittsfläche des Optikkörpers gekrümmt ausgebildet ist.

Es kann vorgesehen sein, dass die Projektionsoptik eine gekrümmte Brennfläche aufweist, wobei die gemeinsame Austrittsfläche des Optikkörpers in der Brennfläche der Projektionsoptik angeordnet ist, wobei die gemeinsame Austrittsfläche zumindest abschnittweise der Krümmung der Brennfläche der Projektionsoptik folgt. Hierbei folgt die Austrittsfläche der Krümmung vor allem im zentralen Winkelbereich der Brennfläche, also in einem Bereich nahe der optischen Achse der Projektionsoptik.

Erfindungsgemäß ist vorgesehen, dass jeder Lichtleitkörper sich von der Eintrittsfläche bis zur Austrittsfläche erstreckende Seitenflächen aufweist, wobei die Austrittsfläche jeweils von zwei Schmalseiten und zwei Längsseiten begrenzt wird, wobei die Seitenflächen zumindest eines Lichtleitkörpers, welche Seitenflächen orthogonal zu einer Richtung quer zur Hauptabstrahlrichtung stehen, gekrümmt ausgebildet sind, wobei jene Seitenfläche des Lichtleitkörpers, welche zur vertikalen Symmetrieachse gerichtet ist, konvex ausgebildet ist, und jene Seitenfläche des Lichtleitkörpers, welche entgegengesetzt zur vertikalen Symmetrieachse gerichtet ist, konkav ausgebildet ist.

Dabei ist erfindungsgemäß vorgesehen, dass jede Reihe einen von der vertikalen Symmetrieachse weg angeordneten äußersten Lichtleitkörper und zumindest einen innenliegenden Lichtleitkörper aufweist, wobei der zumindest eine innenliegende Lichtleitkörper jeder Reihe die gekrümmten Seitenflächen aufweist.

Hierdurch wird der Geometrie der Petzvalfläche der Projektionslinse entgegengewirkt und entlang einer schiefen Hell-Dunkel-Grenzen der Segmente sowie entlang einer in Kurvenlage schiefen Hell-Dunkel-Grenze ein wünschenswerter Intensitätsverlauf vom Zentrum der Lichtverteilung radial nach außen erreicht.

Es kann vorgesehen sein, dass der Optikkörper im Bereich, in welchem die zwei Lichtemissionshälften bei der vertikalen Symmetrieachse zusammenlaufen, zumindest eine Reihe umfasst, aufweisend zumindest zwei Lichtleitkörper, wobei diese Reihe entlang einer Geraden angeordnet ist, welche orthogonal zur vertikalen Symmetrieachse angeordnet ist, wobei vorzugsweise der Optikkörper zwei Reihen umfasst.

Hierdurch ist es möglich, dass falls die segmentierte Lichtverteilung als Fernlichtverteilung vorgesehen ist, auch im Fernlichtbetrieb Licht ins Vorfeld gelangt, und ein Helligkeitsminimum vermieden werden kann.

Es kann vorgesehen sein, dass die Eintrittsflächen jedes Lichtleitkörpers einen Parallelversatz zur entsprechenden Austrittsfläche aufweisen, sodass die Flächenmittelpunkte der Austrittsfläche und der zugehörigen Eintrittsfläche gesehen in Hauptabstrahlrichtung einen Versatz aufweisen.

Diese Vorkehrung dient ebenfalls dazu, den Lichtschwerpunkt Richtung Zentrum der Lichtverteilung zu verschieben, um eine homogene (stetige) Lichtverteilung zu erzeugen, welche ein Maximum in der Mitte aufweist.

Es kann vorgesehen sein, dass die Beleuchtungsvorrichtung eine Steuereinheit und zumindest einen Rollwinkelsensor umfasst, welcher eingerichtet ist, einen Rollwinkel der Abweichung der Ist-Position von einer definierten Standardposition der Beleuchtungsvorrichtung um die Hauptabstrahlrichtung zu bestimmen, wobei die Steuereinheit eingerichtet ist, einen Rollwinkel von dem zumindest einen Rollwinkelsensor zu empfangen und abhängig von dem Rollwinkel einzelne Reihen der Lichtleitkörper ein- und/oder auszuschalten.

Es kann vorgesehen sein, dass bei einem Erfassen eines ersten Rollwinkels die Steuereinheit eingerichtet ist, die erste Reihe der ersten oder der zweiten Lichtemissionshälfte des Optikkörpers anzusteuern bzw. einzuschalten, und wobei bei einem Erfassen eines zweiten Rollwinkels die Steuereinheit eingerichtet ist, die erste und die zweite Reihe der ersten oder der zweiten Lichtemissionshälfte des Optikkörpers anzusteuern bzw. einzuschalten.

Es kann vorgesehen sein, dass der Optikkörper eine dritte Reihe an Lichtleitkörpern umfasst, welche einen zweiten Winkelversatz zur ersten Reihe aufweist und symmetrisch um die vertikale Symmetrieachse angeordnet ist, und wobei der Optikkörper eine vierte Reihe an Lichtleitkörpern umfasst, welche einen dritten Winkelversatz zur ersten Reihe aufweist und symmetrisch um die vertikale Symmetrieachse angeordnet ist.

Es kann vorgesehen sein, dass bei einem Erfassen eines dritten Rollwinkels die Steuereinheit eingerichtet ist, die erste, zweite und dritte Reihe der ersten oder zweiten Lichtemissionshälfte des Optikkörpers anzusteuern bzw. einzuschalten, und wobei bei einem Erfassen eines vierten Rollwinkels die Steuereinheit eingerichtet ist, die erste, zweite, dritte und vierte Reihe der ersten oder zweiten Lichtemissionshälfte des Optikkörpers anzusteuern bzw. einzuschalten.

Es kann vorgesehen sein, dass der erste Rollwinkel in einem Bereich von 5° bis 7°, der zweiter Rollwinkel in einem Bereich von 7° bis 17°, der dritte Rollwinkel in einem Bereich von 17° bis 27° und der vierte Rollwinkel in einem Bereich über 27° liegt.

Es sei angemerkt, dass die obigen Winkelangaben als Absolutbeträge zu verstehen sind und auch die Negativwinkel inbegriffen sind, d.h. dass der Bereich der angegebenen Rollwinkel sowohl in einer Kurvenlange in Richtung rechts als auch in Richtung links gleichermaßen zu verstehen ist.

Es kann vorgesehen sein, dass die segmentierte Lichtverteilung eine segmentierte Fernlichtverteilung ist.

Die Aufgabe wird ebenso gelöst durch einen Kraftfahrzeugscheinwerfer mit zumindest einer erfindungsgemäßen Beleuchtungsvorrichtung.

Nachfolgend wird die Erfindung anhand von beispielhaften Zeichnungen näher erläutert. Hierbei zeigt
Fig. 1 eine beispielhafte Beleuchtungsvorrichtung mit einem Optikkörper und einer nachgeschalteten Projektionsoptik,
Fig. 2 eine Ansicht von oben des Optikkörpers der Beleuchtungsvorrichtung aus Fig. 1,
Fig. 3 eine Ansicht von hinten des Optikkörpers aus Fig. 2 mit Lichtleikörpern, welche in Reihen, die zueinander einen Winkelversatz aufweisen, angeordnet sind,
Fig. 3A eine Ansicht von hinten eines weiteren beispielhaften Optikkörpers,
Fig. 4A eine beispielhafte Lichtverteilung mit einer eingeschalteten ersten Reihe von Lichtleitkörpern,
Fig. 4B eine beispielhafte Lichtverteilung mit einer eingeschalteten ersten und zweiten Reihe von Lichtleitkörpern,
Fig. 4C eine beispielhafte Lichtverteilung mit einer eingeschalteten ersten, zweiten und dritten Reihe von Lichtleitkörpern, und
Fig. 4D eine beispielhafte Lichtverteilung mit einer eingeschalteten ersten, zweiten, dritten und vierten Reihe von Lichtleitkörpern.

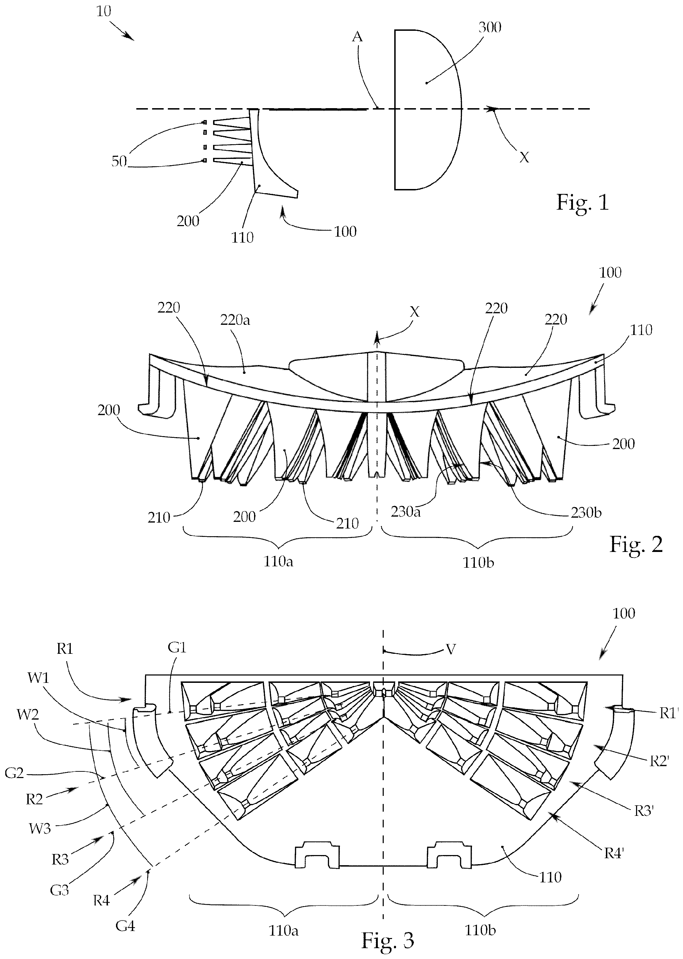

**Fig. 1** zeigt eine beispielhafte Beleuchtungsvorrichtung **10** für einen Kraftfahrzeugscheinwerfer eines einspurigen Kraftfahrzeugs, beispielsweise eines Motorrades, zur Erzeugung einer segmentierten Lichtverteilung, wobei die Beleuchtungsvorrichtung **10** einen Optikkörper **100** aufweist, umfassend einen Grundkörper **110** und mehrere von dem Grundkörper **110** vorragende Lichtleitkörper **200** zum Formen einer festlegbaren segmentierten Lichtverteilung aus dem Licht von Lichtquellen **50**.

Die Lichtleitkörper **200** weisen jeweils eine Lichteintrittsfläche **210** auf, in welche Licht von den Lichtquellen **50** einspeisbar ist, und eine Austrittsfläche **220** auf, aus welcher in den jeweiligen Lichtleitkörper **200** einspeisbares Licht austritt, wobei die Austrittsflächen **220** benachbarter Lichtleitkörper **200** eine gemeinsame Austrittsfläche **220a,** welche gekrümmt ausgebildet ist, des Optikkörpers **100** bilden.

Ferner umfasst die Beleuchtungsvorrichtung **10** mehrere Lichtquellen **50**, wobei zumindest eine Lichtquelle jeweils einer Eintrittsfläche **210** eines Lichtleitkörpers **200** zugeordnet ist, wobei die Beleuchtungsvorrichtung **10** weiters eine Projektionsoptik **300** mit einer optischen Achse **A** aufweist, welche Projektionsoptik **300** eingerichtet ist, dass von der gemeinsamen Austrittsfläche **220a** austretende Licht vor der Beleuchtungsvorrichtung **10** in Richtung einer Hauptabstrahlrichtung **X** abzubilden.

Ferner weist die Projektionsoptik **300** eine gekrümmte Brennfläche auf, wobei die gemeinsame Austrittsfläche **220a** des Optikkörpers **100** in der Brennfläche der Projektionsoptik **300** angeordnet ist, wobei die gemeinsame Austrittsfläche **220a** der Krümmung der Brennfläche der Projektionsoptik **300** folgt.

Der Grundkörper **110** weist eine erste und eine zweite Lichtemissionshälfte **110a**, **110b** auf, wobei die erste Lichtemissionshälfte **110a** Lichtleitkörper **200** aufweist, die in einer ersten Reihe **R1** entlang einer Geraden **G1,** in einer zweiten Reihe **R2** entlang einer Geraden **G2**, in einer dritten Reihe **R3** entlang einer Geraden **G3** und in einer vierten Reihe **R4** entlang einer Geraden **G4** angeordnet sind, wobei die Geraden der ersten und der zweiten Reihe **R1, R2** zueinander um einen ersten Winkelversatz **W1** angeordnet sind, wobei die Geraden der ersten und der dritten Reihe **R1, R3** zueinander einen zweiten Winkelversatz **W2** aufweisen, wobei die Geraden der ersten und der vierten Reihe **R1, R4** einen dritten Winkelversatz **W3** zueinander aufweisen, und wobei die erste und die zweite Lichtemissionshälfte **110a, 110b** zueinander spiegelsymmetrisch um eine vertikale Symmetrieachse **V** an dem Grundkörper **110** angeordnet sind. Hierbei weist die zweite Lichtemissionshälfte **110b** ebenfalls vier Reihen **R1'**, **R2'**, **R3'**, **R4'**, welche ebenfalls den entsprechenden Winkelversatz zueinander aufweisen, wie die Reihen der ersten Lichtemissionshälfte **110a**.

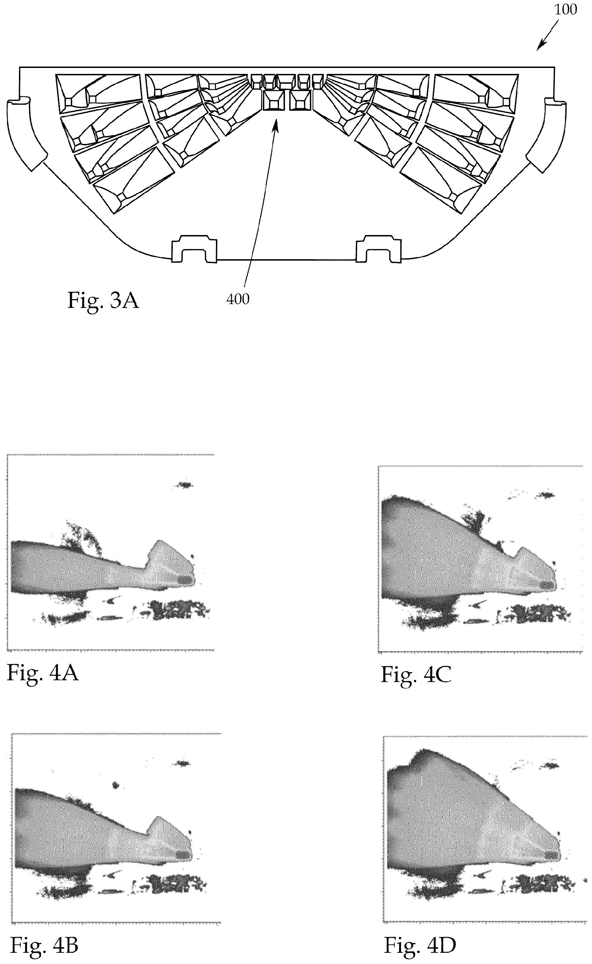

Dabei ist in **Fig. 2** und **Fig. 3** ersichtlich, dass die Austrittsflächen **220** der Lichtleitkörper **200** einer Reihe **R1**, **R1'**, **R2, R2'**, **R3**, **R3'**, **R4**, **R4'** ausgehend von der vertikalen Symmetrieachse **V** in Richtung quer zur Hauptabstrahlrichtung (X) größer werden.

Ferner sind die Eintrittsflächen **210** der Lichtleitkörper **200** in einer gemeinsamen Vertikalebene angeordnet, welche Vertikalebene orthogonal zur optischen Achse **A** der Projektionsoptik **300** angeordnet ist.

Wie in **Fig. 2** und **Fig. 3** ebenfalls zu sehen ist, weist jeder Lichtleitkörper **200** sich von der Eintrittsfläche **210** bis zur Austrittsfläche **220** erstreckende Seitenflächen auf, wobei die Austrittsfläche **220** jeweils von zwei Schmalseiten und zwei Längsseiten begrenzt wird, wobei die Seitenflächen zumindest eines Lichtleitkörpers **200,** welche Seitenflächen orthogonal zu einer Richtung quer zur Hauptabstrahlrichtung **X** stehen, gekrümmt ausgebildet sind, wobei jene Seitenfläche **230a** des Lichtleitkörpers **200**, welche zur vertikalen Symmetrieachse **V** gerichtet ist, konvex ausgebildet ist, und jene Seitenfläche **230b** des Lichtleitkörpers **200**, welche entgegengesetzt zur vertikalen Symmetrieachse **V** gerichtet ist, konkav ausgebildet ist.

Ferner weist jede Reihe **R1**, **R1'**, **R2**, **R2'**, **R3**, **R3'**, **R4**, **R4'** einen von der vertikalen Symmetrieachse **V** weg angeordneten äußersten Lichtleitkörper und zumindest einen innenliegenden Lichtleitkörper auf, wobei der zumindest eine innenliegende Lichtleitkörper jeder Reihe **R1**, **R1'**, **R2, R2'**, **R3**, **R3'**, **R4, R4'** die gekrümmten Seitenflächen aufweist.

Darüber hinaus weisen die Eintrittsflächen **210** jedes Lichtleitkörpers **200** einen Parallelversatz zur entsprechenden Austrittsfläche **220** auf, sodass der Flächenmittelpunkt der Austrittsfläche **220** und der Flächenmittelpunkt der zugehörigen Eintrittsfläche **210** gesehen in Hauptabstrahlrichtung **X** einen Versatz aufweisen, wie in **Fig. 2** und **Fig. 3** zu sehen ist.

Weiters umfasst die Beleuchtungsvorrichtung **10** eine Steuereinheit und zumindest einen Rollwinkelsensor, welcher eingerichtet ist, einen Rollwinkel der Abweichung der Ist-Position von einer definierten Standardposition der Beleuchtungsvorrichtung **10** um die Hauptabstrahlrichtung **X** zu bestimmen, wobei die Steuereinheit eingerichtet ist, einen Rollwinkel von dem zumindest einen Rollwinkelsensor zu empfangen und abhängig von dem Rollwinkel einzelne Reihen **R1**, **R1'**, **R2**, **R2'**, **R3**, **R3'**, **R4**, **R4'** der Lichtleitkörper **200** ein- und/oder auszuschalten.

**Fig. 3** zeigt ein weiteres Beispiel eines Optikkörpers **100**, wobei der Optikkörper **100** im Bereich, in welchem die zwei Lichtemissionshälften bei der vertikalen Symmetrieachse **V** zusammenlaufen, zwei Reihen **400** umfasst, aufweisend zumindest zwei Lichtleitkörper, wobei diese Reihe **400** entlang einer Geraden angeordnet ist, welche orthogonal zur vertikalen Symmetrieachse f angeordnet ist. Das zuvor Gesagte trifft auch auf die Ausführungsform der **Fig. 3A** zu.

**Figuren 4A**, **4B**, **4C** und **4D** zeigen jeweils beispielhafte Lichtverteilungen, bei welcher ein einspuriges Kraftfahrzeug, beispielsweise ein Motorrad, in einer Linkslage bzw. Linkskurve befindet, wobei je nach Rollwinkel einzelne Reihen der ersten Lichtemissionshälfte **110a** hinzugeschalten werden. Es sei angemerkt, dass das Gesagte auch für eine entsprechende Rechtslage bzw. Rechtskurve zu übernehmen ist.

Bei einem Erfassen eines ersten Rollwinkels ist die Steuereinheit eingerichtet, die erste Reihe **R1** der ersten oder zweiten Lichtemissionshälfte **110a, 110b** des Optikkörpers **100** anzusteuern bzw. einzuschalten, was in **Fig. 4A** zu sehen ist, und wobei bei einem Erfassen eines zweiten Rollwinkels die Steuereinheit eingerichtet ist, die erste und die zweite Reihe **R1**, **R2** der ersten oder der zweiten Lichtemissionshälfte **110a**, **110b** des Optikkörpers **100** anzusteuern bzw. einzuschalten, was in **Fig. 4B** zu sehen ist.

Ferner ist bei einem Erfassen eines dritten Rollwinkels die Steuereinheit eingerichtet, die erste, zweite und dritte Reihe **R1**, **R2**, **R3** der ersten oder zweiten Lichtemissionshälfte **110a**, **110b** des Optikkörpers **100** anzusteuern bzw. einzuschalten, was in **Fig. 4C** dargestellt ist, und wobei bei einem Erfassen eines vierten Rollwinkels die Steuereinheit eingerichtet ist, die erste, zweite, dritte und vierte Reihe **R1**, **R2**, **R3**, **R4** der ersten oder zweiten Lichtemissionshälfte **110a**, **110b** des Optikkörpers **100** anzusteuern bzw. einzuschalten, was in **Fig. 4D** zu sehen ist.

Der erste Rollwinkel ist dabei in einem Bereich von 5° bis 7°, der zweiter Rollwinkel in einem Bereich von 7° bis 17°, der dritte Rollwinkel in einem Bereich von 17° bis 27° und der vierte Rollwinkel in einem Bereich über 27°.

### LISTE DER BEZUGSZEICHEN

| | |
|---|---|
| Beleuchtungsvorrichtung... | 10 |
| Lichtquellen... | 50 |
| Optikkörper... | 100 |
| Grundkörper... | 110 |
| Erste Lichtemissionshälfte... | 110a |
| Zweite Lichtemissionshälfte... | 110b |
| Lichtleitkörper... | 200 |
| Eintrittsfläche... | 210 |
| Austrittsfläche... | 220 |
| Gemeinsame Austrittsfläche... | 220a |
| Projektionsoptik... | 300 |
| Optische Achse... | A |
| Hauptabstrahlrichtung... | X |
| Vertikale Symmetrieachse... | V |
| Winkelversatz... | W1, W2, W3 |
| Reihen... | R1, R2, R3, R4, 400 |
| Geraden... | G1, G2, G3, G4 |

## Patentansprüche

1. Beleuchtungsvorrichtung (10) für einen Kraftfahrzeugscheinwerfer eines einspurigen Kraftfahrzeugs zur Erzeugung einer segmentierten Lichtverteilung, wobei die Beleuchtungsvorrichtung (10) Folgendes umfasst:
- ein Optikkörper (100), umfassend einen Grundkörper (110) und mehrere von dem Grundkörper (110) vorragende Lichtleitkörper (200) zum Formen einer festlegbaren segmentierten Lichtverteilung aus dem Licht von Lichtquellen (50), welche Lichtleitkörper (200) jeweils eine Lichteintrittsfläche (210) aufweisen, in welche Licht von Lichtquellen (50) einspeisbar ist, und eine Austrittsfläche (220) aufweisen, aus welcher in den jeweiligen Lichtleitkörper (200) einspeisbares Licht austritt, wobei die Austrittsflächen (220) benachbarter Lichtleitkörper (200) eine gemeinsame Austrittsfläche (220a) des Optikkörpers (100) bilden,
- mehrere Lichtquellen (50), wobei zumindest eine Lichtquelle jeweils einer Eintrittsfläche (210) eines Lichtleitkörpers (200) zugeordnet ist,
- eine Projektionsoptik (300) mit einer optischen Achse (A), welche Projektionsoptik (300) eingerichtet ist, dass von der gemeinsamen Austrittsfläche (220a) austretende Licht vor der Beleuchtungsvorrichtung (10) in Richtung einer Hauptabstrahlrichtung (X) abzubilden,
der Grundkörper (110) eine erste und eine zweite Lichtemissionshälfte (110a, 110b) aufweist, wobei jede Lichtemissionshälfte (110a, 110b) Lichtleitkörper (200) aufweist, die zumindest in einer ersten Reihe (R1) entlang einer Geraden und in einer zweiten Reihe (R2) entlang einer Geraden angeordnet sind, wobei die Geraden der ersten und der zweiten Reihe (R1, R2) zueinander um einen ersten Winkelversatz (W1) angeordnet sind, und wobei die erste und die zweite Lichtemissionshälfte (110a, 110b) zueinander spiegelsymmetrisch um eine vertikale Symmetrieachse (V) an dem Grundkörper (110) angeordnet sind,
**dadurch gekennzeichnet, dass**
jeder Lichtleitkörper (200) sich von der Eintrittsfläche (210) bis zur Austrittsfläche (220) erstreckende Seitenflächen aufweist, wobei die Austrittsfläche (220) jeweils von zwei Schmalseiten und zwei Längsseiten begrenzt wird, wobei die Seitenflächen zumindest eines Lichtleitkörpers (200) gekrümmt ausgebildet sind, wobei jene Seitenfläche des Lichtleitkörpers (200), welche zur vertikalen Symmetrieachse (V) gerichtet ist, konvex ausgebildet ist, und jene Seitenfläche des Lichtleitkörpers (200), welche entgegengesetzt zur vertikalen Symmetrieachse (V) gerichtet ist, konkav ausgebildet ist, und wobei
jede Reihe (R1, R2) einen von der vertikalen Symmetrieachse (V) weg angeordneten äußersten Lichtleitkörper und zumindest einen innenliegenden Lichtleitkörper aufweist, wobei der zumindest eine innenliegende Lichtleitkörper jeder Reihe (R1, R2) die gekrümmten Seitenflächen aufweist.

2. Beleuchtungsvorrichtung nach Anspruch, **dadurch gekennzeichnet, dass** die Eintrittsflächen (210) der Lichtleitkörper (200) in einer gemeinsamen Vertikalebene angeordnet sind, welche Vertikalebene orthogonal zur optischen Achse (A) der Projektionsoptik (300) angeordnet ist.

3. Beleuchtungsvorrichtung nach Anspruch 1 oder 2, **dadurch gekennzeichnet, dass** die gemeinsame Austrittsfläche (220a) des Optikkörpers (100) gekrümmt ausgebildet ist.

4. Beleuchtungsvorrichtung nach einem der Ansprüche 1 bis 3, **dadurch gekennzeichnet, dass** die Projektionsoptik (300) eine gekrümmte Brennfläche aufweist, wobei die gemeinsame Austrittsfläche (220a) des Optikkörpers (100) in der Brennfläche der Projektionsoptik (300) angeordnet ist, wobei die gemeinsame Austrittsfläche (220a) zumindest abschnittweise der Krümmung der Brennfläche der Projektionsoptik (300) folgt.

5. Beleuchtungsvorrichtung nach einem der Ansprüche 1 bis 4, **dadurch gekennzeichnet, dass** der Optikkörper im Bereich, in welchem die zwei Lichtemissionshälften bei der vertikalen Symmetrieachse (V) zusammenlaufen, zumindest eine Reihe (400) umfasst, aufweisend zumindest zwei Lichtleitkörper, wobei diese Reihe (400) entlang einer Geraden angeordnet ist, welche orthogonal zur vertikalen Symmetrieachse (V) angeordnet ist, wobei vorzugsweise der Optikkörper zwei Reihen (400) umfasst.

6. Beleuchtungsvorrichtung nach einem der Ansprüche 1 bis 5, **dadurch gekennzeichnet, dass** die Eintrittsflächen (210) jedes Lichtleitkörpers (200) einen Parallelversatz zur entsprechenden Austrittsfläche (220) aufweisen, sodass die Flächenmittelpunkte der Austrittsfläche (220) und der zugehörigen Eintrittsfläche (210) gesehen in Hauptabstrahlrichtung (X) einen Versatz aufweisen.

7. Beleuchtungsvorrichtung nach einem der Ansprüche 1 bis 6, **dadurch gekennzeichnet, dass** die Beleuchtungsvorrichtung (10) eine Steuereinheit und zumindest einen Rollwinkelsensor umfasst, welcher eingerichtet ist, einen Rollwinkel der Abweichung der Ist-Position von einer definierten Standardposition der Beleuchtungsvorrichtung (10) um die Hauptabstrahlrichtung (X) zu bestimmen, wobei die Steuereinheit eingerichtet ist, einen Rollwinkel von dem zumindest einen Rollwinkelsensor zu empfangen und abhängig von dem Rollwinkel einzelne Reihen (R1, R2) der Lichtleitkörper (200) ein- und/oder auszuschalten.

8. Beleuchtungsvorrichtung nach Anspruch 7, **dadurch gekennzeichnet, dass** bei einem Erfassen eines ersten Rollwinkels die Steuereinheit eingerichtet ist, die erste Reihe (R1) der ersten oder der zweiten Lichtemissionshälfte (110a, 110b) des Optikkörpers (100) anzusteuern bzw. einzuschalten, und wobei bei einem Erfassen eines zweiten Rollwinkels die Steuereinheit eingerichtet ist, die erste und die zweite Reihe (R1, R2) der ersten oder der zweiten Lichtemissionshälfte (110a, 110b) des Optikkörpers (100) anzusteuern bzw. einzuschalten.

9. Beleuchtungsvorrichtung nach einem der Ansprüche 1 bis 8, **dadurch gekennzeichnet, dass** der Optikkörper (100) eine dritte Reihe (R3) an Lichtleitkörpern (200) umfasst, welche einen zweiten Winkelversatz zur ersten Reihe (R1) aufweist und symmetrisch um die vertikale Symmetrieachse (V) angeordnet ist, und wobei der Optikkörper (100) eine vierte Reihe (R4) an Lichtleitkörpern umfasst, welche einen dritten Winkelversatz zur ersten Reihe (R1) aufweist und symmetrisch um die vertikale Symmetrieachse (V) angeordnet ist.

10. Beleuchtungsvorrichtung nach Anspruch 9, **dadurch gekennzeichnet, dass** bei einem Erfassen eines dritten Rollwinkels die Steuereinheit eingerichtet ist, die erste, zweite und dritte Reihe (R1, R2, R3) der ersten oder zweiten Lichtemissionshälfte (110a, 110b) des Optikkörpers (100) anzusteuern bzw. einzuschalten, und wobei bei einem Erfassen eines vierten Rollwinkels die Steuereinheit eingerichtet ist, die erste, zweite, dritte und vierte Reihe (R1, R2, R3, R4) der ersten oder zweiten Lichtemissionshälfte (110a, 110b) des Optikkörpers (100) anzusteuern bzw. einzuschalten.

11. Beleuchtungsvorrichtung nach einem der Ansprüche 1 bis 10, **dadurch gekennzeichnet, dass** die segmentierte Lichtverteilung eine segmentierte Fernlichtverteilung oder Abblendlichtverteilung ist.

12. Kraftfahrzeugscheinwerfer mit zumindest einer Beleuchtungsvorrichtung (10) gemäß einem der Ansprüche 1 bis 11.

## Claims

1. Lighting device (10) for a motor vehicle headlight of a single-track motor vehicle for generating a segmented light distribution, the lighting device (10) comprising
- an optical body (100) comprising a base body (110) and a plurality of light guide bodies (200) projecting from the base body (110) for forming a definable segmented light distribution from the light of light sources (50), which light guide bodies (200) each have a light entry surface (210), into which light from light sources (50) can be fed, and have an exit surface (220) from which light which can be fed into the respective light guide body (200) emerges, the exit surfaces (220) of adjacent light guide bodies (200) forming a common exit surface (220a) of the optical body (100),
- a plurality of light sources (50), at least one light source being assigned in each case to an entry surface (210) of a light guide body (200),
- a projection optic (300) with an optical axis (A), which projection optic (300) is set up to image the light emerging from the common exit surface (220a) in front of the illumination device (10) in the direction of a main radiation direction (X),
the base body (110) has a first and a second light-emitting half (110a, 110b), each light-emitting half (110a, 110b) having light guide elements (200) which are arranged at least in a first row (R1) along a straight line and in a second row (R2) along a straight line, wherein the straight lines of the first and second rows (R1, R2) are arranged relative to one another by a first angular offset (W1), and wherein the first and second light-emitting halves (110a, 110b) are arranged on the base body (110) in mirror symmetry relative to one another about a vertical axis of symmetry (V),
**characterized in that**
each light guide body (200) has side surfaces extending from the entry surface (210) to the exit surface (220), the exit surface (220) being bounded in each case by two narrow sides and two longitudinal sides, the side surfaces of at least one light guide body (200) being curved, wherein that side surface of the light guide body (200) which is directed towards the vertical axis of symmetry (V) is convex, and that side surface of the light guide body (200) which is directed in the opposite direction to the vertical axis of symmetry (V) is concave, and wherein
each row (R1, R2) has an outermost light guide body arranged away from the vertical axis of symmetry (V) and at least one inner light guide body, wherein the at least one inner light guide body of each row (R1, R2) has the curved side surfaces.

2. Lighting device according to claim, **characterized in that** the entry surfaces (210) of the light guide bodies (200) are arranged in a common vertical plane, which vertical plane is arranged orthogonally to the optical axis (A) of the projection optics (300).

3. Lighting device according to claim 1 or 2, **characterized in that** the common exit surface (220a) of the optical body (100) is curved.

4. Lighting device according to one of claims 1 to 3, **characterized in that** the projection optics (300) has a curved focal surface, the common exit surface (220a) of the optical body (100) being arranged in the focal surface of the projection optics (300), the common exit surface (220a) following the curvature of the focal surface of the projection optics (300) at least in sections.

5. Lighting device according to one of claims 1 to 4, **characterized in that** the optical body comprises at least one row (400) in the region in which the two light emission halves converge at the vertical axis of symmetry (V), having at least two light guide bodies, this row (400) being arranged along a straight line which is arranged orthogonally to the vertical axis of symmetry (V), preferably the optical body comprising two rows (400).

6. Lighting device according to one of claims 1 to 5, **characterized in that** the entry surfaces (210) of each light guide body (200) have a parallel offset to the corresponding exit surface (220), so that the surface centers of the exit surface (220) and the associated entry surface (210) have an offset when viewed in the main radiation direction (X).

7. Lighting device according to one of claims 1 to 6, **characterized in that** the lighting device (10) comprises a control unit and at least one roll angle sensor which is set up to determine a roll angle of the deviation of the actual position from a defined standard position of the lighting device (10) about the main radiation direction (X), the control unit being set up to receive a roll angle from the at least one roll angle sensor and to switch individual rows (R1, R2) of the light guide elements (200) on and/or off as a function of the roll angle.

8. Lighting device according to claim 7, **characterized in that**, when a first roll angle is detected, the control unit is set up to actuate or switch on the first row (R1) of the first or second light-emitting half (110a, 110b) of the optical body (100), and wherein, when a first roll angle is detected, the control unit is set up to actuate or switch on the first row (R1) of the first or second light-emitting half (110a, 110b) of the optical body (100). and wherein, when a second roll angle is detected, the control unit is set up to control or switch on the first and second rows (R1, R2) of the first or second light-emitting half (110a, 110b) of the optical body (100).

9. Lighting device according to one of claims 1 to 8, **characterized in that** the optical body (100) comprises a third row (R3) of light guide bodies (200), which has a second angular offset from the first row (R1) and is arranged symmetrically about the vertical axis of symmetry (V), and wherein the optical body (100) comprises a fourth row (R4) of light guide bodies, which has a third angular offset from the first row (R1) and is arranged symmetrically about the vertical axis of symmetry (V).

10. Lighting device according to claim 9, **characterized in that**, when a third roll angle is detected, the control unit is set up to actuate or switch on the first, second and third row (R1, R2, R3) of the first or second light-emitting half (110a, 110b) of the optical body (100), and wherein, when a third roll angle is detected and wherein, when a fourth roll angle is detected, the control unit is set up to control or switch on the first, second, third and fourth rows (R1, R2, R3, R4) of the first or second light-emitting half (110a, 110b) of the optical body (100).

11. Lighting device according to one of claims 1 to 10, **characterized in that** the segmented light distribution is a segmented high beam distribution or low beam distribution.

12. Motor vehicle headlamp with at least one lighting device (10) according to one of claims 1 to 11.

## Revendications

1. Dispositif d'éclairage (10) pour un phare de véhicule à moteur d'un véhicule à moteur à une voie pour produire une distribution de lumière segmentée, le dispositif d'éclairage (10) comprenant ce qui suit :
- un corps optique (100) comprenant un corps de base (110) et une pluralité de guides de lumière (200) faisant saillie du corps de base (110) pour former une distribution de lumière segmentée pouvant être définie à partir de la lumière de sources lumineuses (50), lesquels guides de lumière (200) présentent chacun une surface d'entrée de lumière (210), dans laquelle la lumière de sources lumineuses (50) peut être injectée, et présentant une surface de sortie (220) de laquelle sort la lumière pouvant être injectée dans le corps de guidage de lumière (200) respectif, les surfaces de sortie (220) de corps de guidage de lumière (200) voisins formant une surface de sortie (220a) commune du corps optique (100),
- plusieurs sources lumineuses (50), au moins une source lumineuse étant associée respectivement à une surface d'entrée (210) d'un corps de guidage de lumière (200),
- une optique de projection (300) avec un axe optique (A), laquelle optique de projection (300) est conçue pour reproduire la lumière sortant de la surface de sortie commune (220a) devant le dispositif d'éclairage (10) dans la direction d'une direction de rayonnement principale (X),
le corps de base (110) présente une première et une deuxième moitié d'émission de lumière (110a, 110b), chaque moitié d'émission de lumière (110a, 110b) présentant des corps de guidage de lumière (200) qui sont disposés au moins dans une première rangée (R1) le long d'une ligne droite et dans une deuxième rangée (R2) le long d'une ligne droite, les droites de la première et de la deuxième rangée (R1, R2) étant disposées l'une par rapport à l'autre selon un premier décalage angulaire (W1), et la première et la deuxième moitié d'émission de lumière (110a, 110b) étant disposées sur le corps de base (110) de manière symétrique l'une par rapport à l'autre autour d'un axe de symétrie vertical (V),
**caractérisé en ce que**
chaque corps de guidage de lumière (200) présente des surfaces latérales s'étendant de la surface d'entrée (210) jusqu'à la surface de sortie (220), la surface de sortie (220) étant délimitée respectivement par deux petits côtés et deux grands côtés, les surfaces latérales d'au moins un corps de guidage de lumière (200) étant réalisées de manière incurvée, la surface latérale du corps de guidage de lumière (200) qui est dirigée vers l'axe de symétrie vertical (V) étant convexe, et la surface latérale du corps de guidage de lumière (200) qui est dirigée à l'opposé de l'axe de symétrie vertical (V) étant concave, et où
chaque rangée (R1, R2) comprend un corps de guidage de lumière le plus extérieur disposé à l'écart de l'axe de symétrie vertical (V) et au moins un corps de guidage de lumière intérieur, le au moins un corps de guidage de lumière intérieur de chaque rangée (R1, R2) comprenant les surfaces latérales incurvées.

2. Dispositif d'éclairage selon la revendication, **caractérisé en ce que** les surfaces d'entrée (210) des corps de guidage de lumière (200) sont disposées dans un plan vertical commun, lequel plan vertical est disposé orthogonalement à l'axe optique (A) de l'optique de projection (300).

3. Dispositif d'éclairage selon la revendication 1 ou 2, **caractérisé en ce que** la surface de sortie commune (220a) du corps optique (100) est réalisée de manière incurvée.

4. Dispositif d'éclairage selon l'une des revendications 1 à 3, **caractérisé en ce que** l'optique de projection (300) présente une surface focale incurvée, la surface de sortie commune (220a) du corps optique (100) étant disposée dans la surface focale de l'optique de projection (300), la surface de sortie commune (220a) suivant au moins en partie la courbure de la surface focale de l'optique de projection (300).

5. Dispositif d'éclairage selon l'une des revendications 1 à 4, **caractérisé en ce que** le corps optique comprend, dans la zone où les deux moitiés d'émission lumineuse se rejoignent au niveau de l'axe de symétrie vertical (V), au moins une rangée (400) comprenant au moins deux corps de guidage de lumière, cette rangée (400) étant disposée selon une droite orthogonale à l'axe de symétrie vertical (V), le corps optique comprenant de préférence deux rangées (400).

6. Dispositif d'éclairage selon l'une des revendications 1 à 5, **caractérisé en ce que** les faces d'entrée (210) de chaque corps de guidage de lumière (200) présentent un décalage parallèle à la face de sortie (220) correspondante, de sorte que les centres des faces de la face de sortie (220) et de la face d'entrée (210) correspondante présentent un décalage, vu dans la direction principale d'émission (X).

7. Dispositif d'éclairage selon l'une des revendications 1 à 6, **caractérisé en ce que** le dispositif d'éclairage (10) comprend une unité de commande et au moins un capteur d'angle de roulis qui est agencé pour déterminer un angle de roulis de l'écart de la position réelle par rapport à une position standard définie du dispositif d'éclairage (10) autour de la direction principale de rayonnement (X), l'unité de commande étant agencée pour recevoir un angle de roulis de l'au moins un capteur d'angle de roulis et pour allumer et/ou éteindre des rangées individuelles (R1, R2) des corps de guidage de lumière (200) en fonction de l'angle de roulis.

8. Dispositif d'éclairage selon la revendication 7, **caractérisé en ce que**, lors d'une détection d'un premier angle de roulis, l'unité de commande est agencée pour activer ou désactiver la première rangée (R1) de la première ou de la deuxième moitié d'émission de lumière (110a, 110b) du corps optique (100). et, lors de la détection d'un deuxième angle de roulis, l'unité de commande est conçue pour commander ou activer la première et la deuxième rangée (R1, R2) de la première ou de la deuxième moitié d'émission de lumière (110a, 110b) du corps optique (100).

9. Dispositif d'éclairage selon l'une des revendications 1 à 8, **caractérisé en ce que** le corps optique (100) comprend une troisième rangée (R3) de guides de lumière (200) présentant un deuxième décalage angulaire par rapport à la première rangée (R1) et disposée symétriquement autour de l'axe de symétrie vertical (V), et dans lequel le corps optique (100) comprend une quatrième rangée (R4) de guides de lumière présentant un troisième décalage angulaire par rapport à la première rangée (R1) et disposée symétriquement autour de l'axe de symétrie vertical (V).

10. Dispositif d'éclairage selon la revendication 9, **caractérisé en ce que**, lors d'une détection d'un troisième angle de roulis, l'unité de commande est agencée pour activer ou pour mettre en marche la première, la deuxième et la troisième rangée (R1, R2, R3) de la première ou de la deuxième moitié d'émission de lumière (110a, 110b) du corps optique (100). et dans lequel, lors de la détection d'un quatrième angle de roulis, l'unité de commande est conçue pour commander ou allumer la première, la deuxième, la troisième et la quatrième rangée (R1, R2, R3, R4) de la première ou de la deuxième moitié d'émission de lumière (110a, 110b) du corps optique (100).

11. Dispositif d'éclairage selon l'une des revendications 1 à 10, **caractérisé en ce que** la distribution lumineuse segmentée est une distribution segmentée de feux de route ou de feux de croisement.

12. Projecteur de véhicule automobile comportant au moins un dispositif d'éclairage (10) selon l'une des revendications 1 à 11.
